# EUROPEAN PATENT SPECIFICATION

(11) **EP 0 724 476 B1**
(45) Date of publication and mention of the grant of the patent: **09.12.1998**
(21) Application number: 94922410.9
(22) Date of filing: 01.08.1994
(51) Int. Cl.: B01D 53/78, B01D 47/02, B01D 53/18, F23J 15/04

(54) **METHOD OF FLUE GAS PURIFICATION AND FLUE GAS PURIFIER**
METHODE UND VORRICHTUNG ZUR ABGASREINIGUNG
PROCEDE D'EPURATION DE GAZ BRULE ET EPURATEUR DE GAZ BRULE

(30) Priority: 05.08.1993 SE 9302567
(43) Date of publication of application: 07.08.1996
(73) Proprietor: MASARNA I MORA AB, S-792 00 Mora (SE)
(72) Inventor: HEDBERG, Sören, S-790 43 Sollerön (SE); BOGG, Anders, S-792 00 Mora (SE)
(74) Representative: Bjellman, Lennart Olov Henrik
(86) International application number: SE9400720
(87) International publication number: WO9504589

(56) References cited:
- AT-B- 371 235
- DE-B- 1 266 730
- US-A- 3 998 613

## Description

The present invention relates to a gas purifier, and more particularly, but not exclusively, to the cleansing or purifying of flue-gases with the aid of a flue-gas purifier, whereby the efficiency of the combustion system is improved and the use of a conventional smoke stack is rendered unnecessary.

In the case of conventional combustion systems, it is not possible to recover all of the energy that can be recovered theoretically. This is because the flue-gases that leave the boiler must have a lowest temperature of about 250°C, in order to be able to rise up through the smoke stack and up into the air to a height at which the flue-gases and the contaminants carried thereby will be spread over an area which is sufficiently wide to prevent the occurrence of serious damage.

Irrespective of the type of conventional flue-gas purifier used at present, it is necessary for the flue-gases to flow through the smoke stack at a given lowest velocity, which presumes a high gas temperature. This can present problems regarding the recovery of heat from the flue-gases when the temperature of the flue-gases exiting from the boiler to the smoke stack is lowered to an extent which influences the velocity of the outgoing gases. Consequently, when the fuel is combusted at a temperature of 1,000°C in the furnace itself, the flue-gas temperature in the boiler, in which heating is effected by the heat-carrying medium of the system, normally water, is normally lowered by 750°C. The flue-gases exiting from the boiler will then have a temperature of 250°C.

The object of the present invention is to overcome the aforesaid problems. This object is achieved with a method and a flue-gas purifier according to the following claims, which also disclose the individual characteristic features of the invention.

From DE-A-1 266 730 is known an apparatus for cleaning gases generated in a combustion process, including a fan operative to draw the gases through the liquid of a partially filled first container in a suction phase, followed by a pressure phase where the gases are forced through the liquid of a separate, partially filled second container before the gases are discharged. The apparatus of DE-A-1 266 730 does however not provide for a turbulent gas flow outside the liquids.

US-A-3 998 613 discloses a flue gas cleaning apparatus having a multiplicity of successive, individual and communicating chambers partially filled with liquid. Powerful pump means are arranged to cause liquid displacement from one chamber to the next, and to force the gas through the liquid from the inlet side to the outlet side, passing from one chamber to the other through openings disposed beneath the liquid level. No means are provided for a turbulent gas flow outside the liquid and an increased surface contact between flue gas and liquid.

AT-A-371 235 is also mentioned as it discloses a device for utilizing the heat of the flue gases from a combustion process by forcing the gases through a number of individual containers, partially filled with liquid, and leading a heat exchange medium in close contact with the container sides.

The invention will now be described in more detail with reference to the accompanying drawings, in which
Fig. 1 illustrates schematically and from above a heating system equipped with an inventive flue-gas purifier;
Fig. 2 is a schematic longitudinal section view of an inventive flue-gas purifier;

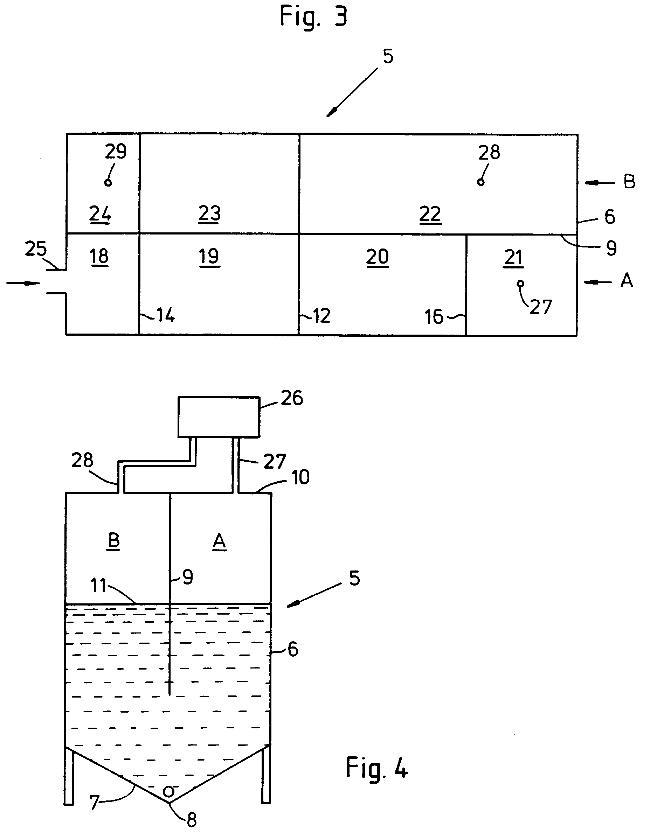

Fig. 3 is a schematic longitudinal section view of the flue-gas purifier shown in Fig. 2; and
Fig. 4 is a schematic cross-sectional view of the flue-gas purifier shown in Figs. 2 and 3.

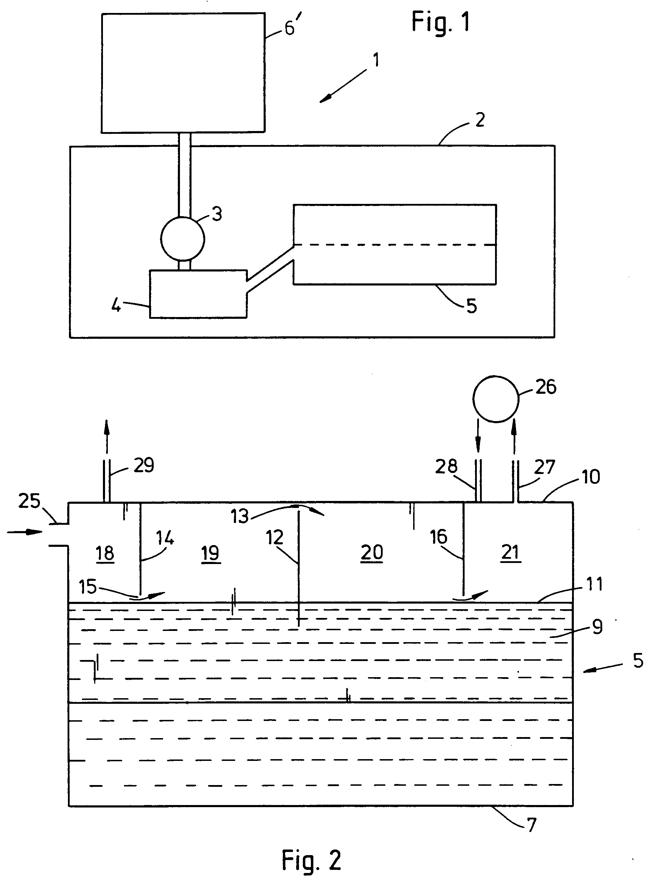

Fig. 1 illustrates a heating plant 1 which includes an inventive flue-gas purifier. The plant 1 is housed in a container 2 and includes a combustion furnace 3, a boiler 4 in which heat exchange with the heat-carrying medium takes place, and an inventive flue-gas purifier 5. Fuel for combustion, for instance wood chips or oil, is taken from a fuel store 6' located outside the container 2, and charged to the furnace 3. The described arrangement in which the invention is applied with a plant or system in which the major part thereof is housed in a container has no significance with regard to the invention, since the invention can be applied with practically any type of combustion plant.

According to the invention, the heat exchange effected in the boiler 4 is adapted so that the temperature of the flue-gases leaving the boiler will be maintained at about 100°C. Normally, this temperature is not sufficient to discharge the flue-gases as effectively as is necessary. However, a temperature of 100°C is clearly sufficient to prevent damage to the boiler 4 and also to the flue-gas conduits leading from the boiler to the flue-gas purifier 5.

According to a preferred embodiment, the inventive flue-gas purifier 5 includes a box-like container 6 which is made of welded steel sheet for instance, and has a rectangular shape when seen from above. The container bottom 7 has a V-shaped cross-section and accomadates an outfeed screw (not shown) in the apex 8 thereof. A partition wall 9 extends downwardly from the lid or cover 10 of the container 6 along the length of the container from end-wall to end-wall in a direction towards the container bottom 7, where it terminates at a distance of roughly one-third of the vertical distance from the apex 8 of the V-shaped bottom 7. This partition wall 9 may be insulated.

The container 6 is filled partially with water to a level 11, which lies roughly at two-thirds of the container height above the apex 8 of the bottom 7. Although not shown, level sensors and water-filling and water-draining devices may be provided for the purpose of maintaining a desired volume of water in the container 6.

A wall or baffle 12 extends transversely across the container 6 from a location approximately midway of the length of the container. This wall 12 defines a gap 13 between its upper edge and the container cover 10 and extends downwardly to terminate at a short distance beneath the water surface 11. Another wall or baffle 14 extends transversely across the container 6, between the wall 12 and the end-wall of the container 6, this end-wall including a flue-gas inlet 25. The wall 14 is attached to the container cover 10 and extends down towards the water level 11, but terminates short of the water level so as to form a gap 15. A further wall or baffle 16 is provided between the partition wall 9 and one long wall 17 of the container 6. The walls 12, 14 and 16 form a series of chambers 18-24 above the water level 11. The bottom end-edges of the walls 12, 14, 16 will preferably be slotted so as to have a comb-like configuration which functions to divide the flue-gases into many smaller flows, so that the flue-gases which pass through the chambers 18-24 and partially through the water will be divided into the smallest possible flow units for the best possible contact with the water.

The partition wall 9 divides the container 6 into two longitudinally extending parts or compartments A and B above the water level 11. The one part A includes sequentially the chambers 18-21, wherein the flue-gas inlet 25 which receives flue-gases from the boiler 4 discharges into the chamber 18. The chambers 18-21 forming the part A thus lie sequentially between one long side 17 of the container 6 and the partition wall 9. The inlet 27 of an air pump 26, for instance a fan, is connected to the chamber 21 and located in the container cover 10, while the fan outlet 28 is located in the chamber 22 which lies opposite the chambers 20 and 21 but between the partition wall and the opposite container long wall. The chamber 24 lies opposite the chamber 18 between the partition wall 9 and the opposing long wall, while the chamber 23 lies between these chambers 22 and 24 centrally opposite the chamber 19. The chambers 22, 23 and 24 thus form the part B of the container 6. The fan outlet 28 opens out beneath the water level 11, suitably into a spray nozzle (not shown), which functions to spread the flue-gases throughout the water. An outlet 29 for purified and cooled gases is provided in the chamber 24, which is the last chamber in the series.

The fan 26 is controlled by the pressure in the boiler 4 and in the part A of the container 6 by means of electronic control equipment not shown. In order to achieve proper combustion, there is preferably maintained in the boiler 4 a subpressure of about 50 Pa (5 mm water column), which can normally be achieved by causing the fan 26 to maintain a subpressure of about 100 Pa (10 mm water column) in part A of the container 6. Naturally, different factors influence the pressure primarily in the boiler 4, although the fan 26 can be controlled readily to maintain the boiler pressure at a desired level with the aid of proper control equipment,
wherein the pressure in the container part A will be held at an acceptable level in response to this control. It is essential that the pressure in the boiler 4 is correct for the combustion process, whereas the pressure in the container part A is less essential but will constantly lie somewhat beneath the boiler pressure, since the fan 26 primarily evacuates the container part A and secondarily the boiler 4.

When the heating plant is in operation, the flue-gases sucked from the boiler 4 into the chamber 18 of the flue-gas purifier 5 have a temperature of about 100°C. As indicated by the arrow, the flue-gases continue from the chamber 18 through the gap 15 between the wall 14 and the water surface 11 and are divided into part-flows by virtue of the comb-like lower part of the wall 14, and impinge also on the water surface. The flue-gases swirl around in the chamber 19 and continue in the direction of the arrow through the gap 13 defined between the container cover 10 and the upper edge of the wall 12 into the chamber 20, in which the flue-gases continue to swirl and from which the gases pass out through the gap between the water surface 11 and the wall 16 and into the chamber 21, as indicated by the arrow. Naturally, the flue-gases will impinge on the surface of the water 11 during the whole of their transportation through the chambers in the container part A. The flue-gases are sucked from the chamber 21 into the fan 26 through the inlet 27, and then pass out from the fan through the outlet 28 and into the chamber 22 in part B of the container 6. Although not shown, the outlet 28 opens into a nozzle which is lowered into the water to a level between the bottom edge of the partition wall 9 and the water surface 11. The flue-gases are then urged through the chambers 23 and 24 in similar routes or while moving in similar patterns as the flue-gases in the chambers in the container part A, and finally reach the outlet 29 through which they are discharged to atmosphere.

During their movement through the container 6, the flue-gases are divided into small bubbles, the more the better, which come into contact with the water in the container 6. The flue-gases are therewith cooled and particles of soot and other contaminants carried by the gases will precipitate into the water. In round numbers, the flue-gases contain 40% steam, 15% carbon dioxide and 35% nitrogen gas when entering the container 6. After having passed through the container, the gases will contain between 6 and 15% carbon dioxide, this value varying in dependence on the pH of the water, and 35% nitrogen. The steam is condensed in the container 6, due to the fact that container water is kept at a temperature beneath 100°C, the nitrogen gas is inert and natural and can therefore be discharged to atmosphere to no detriment, while the carbon dioxide emission lies within fully acceptable values.

With the intention of maintaining the temperature of the water in the container 6 at the lowest possible level, preferably not above 37°C, the container may include a heat exchanger which functions to cool the water and also to enable further heat to be recovered in addition to that covered by the boiler 4.

The container water will preferably be maintained at a pH above 7, in order to bind heavy metals in the flue-gases. This may be achieved with the aid of a device (not shown) which functions to deliver lime to the water, wherein the volumes in which the lime is dispensed may be controlled by a conventional detector or sensor means which monitors the pH of the water with respect to a preset pH value.

The contaminants precipitated into the water sink to the bottom of the container and are removed therefrom when necessary by means of the earlier mentioned screw feed arrangement (not shown).

The invention is based on the concept of causing the flue-gases to pass through a container which has two departments A and B which are mutually separated with regard to the subpressures and overpressures in the routes followed by the flue-gases through the container 6, but which are mutually joined with regard to the water volume in the container 6, and by drawing flue-gases by suction into one department or part A and transferring the flue-gases from this container part into the second container part or department B under pressure. In addition, the flue-gases are finely divided as they pass through the comb-like bottom edges of the walls 12, 14, 16 and are released into the container part or department B through a spray nozzle.

However, with regard to the purely constructive design of the inventive flue-gas purifier 5 it has been found that an unexpected positive effect is obtained by virtue of the fact that the water level in the subpressure container part A strives to increase while the water level in the overpressure container part B strives to decrease. However, instead of a constant level difference between the two container parts or departments, it has been found that a pumping effect is generated by virtue of a relatively regular raising and lowering of the water levels. This results, in turn, in greater turbulence and in more finely dividing of the flue-gases and in a varying resistance to the flue-gases as they pass into the gaps between the walls and the water surface 11. As a result of this "splashing effect", the contact surfaces between water and flue-gases is much greater than when the gases pass through stationary water. This effect improves both the cooling effect and the purifying effect.

It will be understood that the described and illustrated embodiment of the flue-gas purifier is only one of several possible embodiments. For instance, the container parts A and B may well be arranged in some other sequence, for instance one after the other, in a circle, etc., and that the container parts may include more or fewer chambers without departing from the inventive concept as defined in the following claims.

## Claims

1. A method for purifying flue-gases deriving from a combustion process, whereby the flue gases, before discharge to the surroundings, are first submitted to a suction phase followed by a pressure phase, wherein the gases are forced to contact and pass through, resp., a common volume of liquid inside a container, **characterized by** drawing the gases during the suction phase over a number of edges having a comb-like configuration to divide the gases into a multiplicity of flow units and directing the gases above and in close surface contact with the liquid as the gases pass through said edges, and by forcing the gases during the pressure phase through the liquid and over a number of similarly shaped edges above the liquid surface, suction and pressure phases being separated and partly defined by the surface level of the common liquid volume.

2. The method of claim 1, **characterized by** providing in the container a multiplicity of successive chambers separated by walls, the bottom ends of the walls formed with said edges of comb-like configuration and positioned to force the flue gases in close contact with the liquid as the gases pass from one chamber to the next and, optionally, partially through the liquid in both suction and pressures phases, respectively.

3. The method of claim 1, **characterized by** the suction phase being separated from the pressure phase by a partition wall, extending from the container cover and into the liquid well below the liquid level, the flue gases being drawn from the suction side to the pressure side by a pump, forcing the gases to pass through the liquid on the pressure side by spraying the gases into the liquid through a submerged nozzle.

4. Method of claim 3, **characterized by** controlling the operation of the pump to maintain a predetermined subpressure for the combustion process from which the flue-gas to be purified is drawn by the pump.

5. Method of claim 1, **characterized by** lowering the temperature of the flue gases to appr. 100 degrees Celsius prior to the gases reaching the liquid volume, the liquid being water.

6. A flue gas purifier (5) for cleaning flue gases deriving from a combustion process (3,4), comprising a closed container (6) partially filled with liquid to a level (11), the container having a V-shaped bottom (8), longitudinal sides (17), end walls and a top cover (10), a flue gas inlet (25) and a flue gas outlet (29) and a pump (26) operative to force the flue gas through the flue gas purifier during cleaning, **characterized by** a longitudinal partition wall (9) extending vertically from the top cover (10) and into the liquid, dividing the container space into a suction side and a pressure side, resp., the inlet (25) being attached to the suction side and the outlet (29) being attached to the pressure side, said pump (26) arranged to draw the flue gas from the suction side and force the gas through the liquid on the pressure side by spraying the gas through a submerged nozzle, both suction side and pressure side being divided into a multiplicity of successive chambers (18 - 24) separated by walls (14,12,16), the walls alternately extending transversally from the container top cover and ending closely above the liquid level (11), alternately extending transversally from a distance underneath the container top cover and ending below the liquid level, the lower free edges of the walls (12,14,16) having a comb-like configuration.

7. The flue gas purifier of claim 6, **characterized by** a longitudinally extended bottom screw operative to discharge from the container contaminants that are precipitated from the flue gases into the liquid.

8. The flue gas purifier of claim 6, **characterized by** means for monitoring the liquid pH value and for delivering to the liquid an agent that will maintain a liquid pH value above 7.

9. The utilization of the flue gas purifier of claim 6 in a heating plant which comprises a fuel store, a furnace, a boiler and the flue gas purifier, wherein the furnace, boiler and purifier all are disposed within a common housing.

## Patentansprüche

1. Verfahren zur Reinigung von Abgasen, die bei einem Verbrennungsprozeß entstehen, wobei die Abgase vor dem Entweichen in die Umgebung zuerst einer Saugphase unterworfen werden, der eine Druckphase folgt, bei welcher die Gase mit einem innerhalb eine Behälters befindlichen gemeinsamen Volumens in Kontakt gebracht bzw. durch dieses hindurchgeführt werden,
dadurch gekennzeichnet, daß die Gase während der Saugphase über eine Anzahl von Kanten, die kammförmig ausgebildet sind, gefährt werden, so daß sie in eine Mehrzahl von Strömungseinheiten unterteilt werden, und daß die Gase oberhalb und in engem Oberflächenkontakt mit der Flüssigkeit gebracht werden, wenn sie durch die Kanten strömen, und daß die Gase während der Druckphase durch die Flüssigkeit und über eine Anzahl ähnlich geformter Kanten oberhalb des Flüssigkeitsspiegels gedrückt werden, wobei die Saug- und Druckphasen voneinander getrennt und teilweise durch den Oberflächenpegel des gemeinsamen Flüssigkeitsvolumens definiert werden.

2. Verfahren nach Anspruch 1,
dadurch gekennzeichnet, daß in dem Behälter eine Mehrzahl aufeinanderfolgender Kammern angeordnet sind, die durch Wände getrennt sind, wobei die unteren Enden der Wände mit kammförmigen Kanten ausgebildet und so angeordnet sind, daß die Abgase in engem Kontakt mit der Flüssigkeit gebracht werden, wenn sie von einer Kammer in die nächste gelangen, und als Option sowohl in der Saug- wie auch der Druckphase teilweise durch die Flüssigkeit gelangen.

3. Verfahren nach Anspruch 1,
dadurch gekennzeichnet, daß die Saugphase von der Druckphase durch eine Trennwand getrennt ist, die vom Behälterdeckel in die Flüssigkeit bis gut unter deren Spiegel reicht, und daß die Abgase durch eine Pumpe von der Saugseite in die Druckseite gezogen werden, welche die Gase auf der Druckseite durch die Flüssigkeit befördert, wobei die Gase durch eine eingetauchte Düse in die Flüssigkeit eingeblasen werden.

4. Verfahren nach Anspruch 3,
dadurch gekennzeichnet, daß der Pumpenbetrieb so gesteuert wird, daß ein vorbestimmter Unterdruck für den Verbrennungsprozeß aufrechterhalten wird, aus dem die zu reinigenden Abgase durch die Pumpe abgesaugt werden.

5. Verfahren nach Anspruch 1,
dadurch gekennzeichnet, daß die Temperatur der Abgase auf etwa 100°C abgesenkt wird, ehe die Gase das Flüssigkeitsvolumen erreichen, und daß die Flüssigkeit Wasser ist.

6. Abgasreiniger (5) zum Reinigen von aus einem Verbrennungsprozeß (3, 4) stammenden Abgasen mit einem geschlossenen Behälter (6), der bis zu einem Pegel (11) mit Flüssigkeit gefüllt ist und einen V-förmigen Boden (8), Längsseiten (17), Endwände und eine Abdeckung (10) hat, ferner einen Abgaseinlaß (25) und einen Abgasauslaß (29) sowie eine Pumpe (26), welche das Abgas während der Reinigung durch den Abgasreiniger drückt,
dadurch gekennzeichnet, daß eine Längstrennwand (9) vertikal von der Abdeckung (10) in die Flüssigkeit ragt und den Behälterraum in eine Saugseite bzw. eine Druckseite unterteilt, daß der Einlaß (25) an der Saugseite und der Auslaß (29) an der Druckseite angebracht sind und die Pumpe (26) so angeordnet ist, daß sie das Abgas von der Saugseite ansaugt und das Gas durch die Flüssigkeit auf der Druckseite drückt, indem sie es durch eine eingetauchte Düse ausbläst, daß sowohl die Saugseite wie auch die Druckseite in eine Mehrzahl aufeinanderfolgender Kammern (18, 24) unterteilt ist, die durch Wände (14, 12, 16) voneinander getrennt sind, daß die Wände abwechselnd quer von der Behälterabdeckung wegragen und dicht oberhalb des Flüssigkeitspegels (11) enden und abwechselnd quer von einem Abstand unter der Behälteroberseite bis unter den Flüssigkeitspegel ragen, wo sie enden, und daß die unteren freien Kanten der Wände (14, 12, 16) kammförmig ausgebildet sind.

7. Abgasreiniger nach Anspruch 6,
gekennzeichnet durch eine längs verlaufende Bodenschnecke zur Entfernung von Verunreinigungen, die sich aus den Abgasen in die Flüssigkeit niedergeschlagen haben, aus dem Container.

8. Abgasreinger nach Anspruch 6,
gekennzeichnet durch eine Überwachungseinrichtung für den pH-Wert der Flüssigkeit und Zuführung eines Agens, welches den pH-Wert der Flüssigkeit über 7 hält, zu der Flüssigkeit.

9. Verwendung des Abgasreinigers nach Anspruch 6 in einer Heizanlage mit einem Brennstoffspeicher, einem Ofen, einem Boiler und dem Abgasreiniger, wobei Ofen, Boiler und Reiniger alle in einem gemeinsamen Gehäuse untergebracht sind.

## Revendications

1. Procédé pour l'épuration de gaz de fumée provenant d'un traitement de combustion, dans lequel avant d'être déchargés dans l'environnement, les gaz de fumée sont d'abord soumis à une phase d'aspiration suivie d'une phase de compression, où les gaz sont mis en contact et envoyés de façon forcée à travers, respectivement, un volume commun de liquide à l'intérieur d'un récipient, caractérisé par l'entraînement des gaz pendant la phase d'aspiration au-dessus d'un certain nombre d'arêtes ayant une configuration en forme de peigne pour diviser les gaz en une multiplicité de flux unitaires et l'envoi des gaz au-dessus du liquide et en contact superficiel étroit avec celui-ci au fur et à mesure que les gaz franchissent les dites arêtes, et par l'envoi forcé des gaz pendant la phase de compression à travers le liquide et au-dessus d'un certain nombre d'arêtes de configuration similaire au-dessus de la surface du liquide, les phases d'aspiration et de compression étant séparées et partiellement définies par le niveau de la surface du volume de liquide commun.

2. Procédé suivant la revendication 1, caractérisé par la fourniture dans le récipient d'une multiplicité de chambres successives séparées par des parois, les extrémités inférieures des parois formées avec les dites arêtes ayant une configuration en forme de peigne et disposées de façon à forcer les gaz de fumée à entrer en contact étroit avec le liquide au fur et à mesure que les gaz passent d'une chambre à la suivante, et éventuellement, partiellement à travers le liquide à la fois dans les phases d'aspiration et de compression, respectivement.

3. Procédé suivant la revendication 1, caractérisé en ce que la phase d'aspiration est séparée de la phase de compression par une paroi de séparation se prolongeant depuis le couvercle du récipient et dans le liquide bien en-dessous du niveau du liquide, que les gaz de fumée sont entraînés depuis le coté d'aspiration jusqu'au côté de compression par une pompe, que les gaz sont envoyés de façon forcée à travers le liquide sur le côté de compression par atomisation des gaz dans le liquide à travers une buse immergée.

4. Procédé suivant la revendication 3, caractérisé par le contrôle du fonctionnement de la pompe de façon à maintenir une dépression prédéterminée pour le traitement de combustion depuis lequel le gaz de fumée à épurer est aspiré par la pompe.

5. Procédé suivant la revendication 1, caractérisé par l'abaissement de la température des gaz de fumée à environ 100°C avant le moment où les gaz atteignent le volume du liquide, le liquide étant de l'eau.

6. Epurateur de gaz de fumée (5) pour l'épuration de gaz de fumée provenant d'un traitement de combustion (3, 4), comprenant un récipient fermé (6) partiellement rempli d'un liquide jusqu'à un niveau (11), le récipient ayant un fond (8) en forme de V, des côtés longitudinaux (17), des parois terminales et un couvercle supérieur (10), une entrée (25) de gaz de fumée et une sorte (29) de gaz de fumée, et une pompe (26) qui fonctionne pour forcer le gaz de fumée à travers l'épurateur de gaz de fumée pendant l'épuration, caractérisé par une paroi de séparation longitudinale (9) se prolongeant verticalement à partir du couvercle supérieur (10) et à l'intérieur du liquide, divisant l'espace du récipient en un côté d'aspiration et un côté de compression, respectivement, l'entrée (25) étant rattachée au côté d'aspiration et la sortie (29) étant rattachée au côté de compression, la dite pompe (26) étant disposée de façon à aspirer le gaz de fumée provenant du côté d'aspiration et à forcer le gaz à traverser le liquide vers le côté de compression par atomisation du gaz à travers une buse immergée, le côté d'aspiration et le côté de compression étant tous deux divisés en une multiplicité de chambres successives (18 à 24) séparées par des parois (14, 12, 16), les parois se prolongeant alternativement de façon transversale soit depuis le couvercle supérieur du récipient et finissant juste au-dessus du niveau de liquide (11), soit depuis une certaine distance en-dessous du couvercle supérieur du récipient et finissant en-dessous du niveau du liquide, les arêtes libres inférieures des parois (12, 14, 16) ayant une configuration en forme de peigne.

7. Epurateur de gaz de fumée suivant la revendication 6, caractérisé par une vis située au fond de façon longitudinale fonctionnant pour décharger hors du récipient les contaminants qui sont précipités à partir des gaz de fumée dans le liquide.

8. Epurateur de gaz de fumée suivant la revendication 6, caractérisé par un moyen de surveillance de la valeur du pH du liquide et de distribution eu liquide d'un agent qui va maintenir une valeur du pH du liquide supérieure à 7.

9. Utilisation de l'épurateur de gaz de fumée suivant la revendication 6 dans une installation de chauffage qui comprend un stockage de combustible, un four, une chaudière et l'épurateur de gaz de fumée, dans laquelle le four, la chaudière et l'épurateur sont tous disposés à l'intérieur d'un logement commun.
